(19) Europäisches Patentamt
European Patent Office
Office européen des brevets

(11) **EP 0 877 916 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(21) Anmeldenummer: **96900872.1**

(22) Anmeldetag: **31.01.1996**

(51) Int Cl.⁷: **G01D 5/04**, G01D 5/249

(86) Internationale Anmeldenummer:
**PCT/DE96/00132**

(87) Internationale Veröffentlichungsnummer:
**WO 96/027116 (06.09.1996 Gazette 1996/40)**

(54) **VERFAHREN UND VORRICHTUNG ZUR WINKELMESSUNG BEI EINEM DREHBAREN KÖRPER**

ANGLE MEASURING PROCESS AND DEVICE FOR ROTARY BODIES

PROCEDE ET DISPOSITIF DE MESURE ANGULAIRE POUR CORPS ROTATIFS

(84) Benannte Vertragsstaaten:
**DE FR GB IT SE**

(30) Priorität: **28.02.1995 DE 19506938**

(43) Veröffentlichungstag der Anmeldung:
**18.11.1998 Patentblatt 1998/47**

(73) Patentinhaber: **ROBERT BOSCH GMBH**
**70442 Stuttgart (DE)**

(72) Erfinder:
• **ZABLER, Erich**
**D-76297 Stutensee (DE)**
• **MARX, Klaus**
**D-70563 Stuttgart (DE)**
• **JOST, Franz**
**D-70565 Stuttgart (DE)**
• **ABENDROTH, Manfred**
**D-71672 Marbach (DE)**
• **BRAUN, Hans**
**D-70178 Stuttgart (DE)**

(56) Entgegenhaltungen:
**FR-A- 2 697 081**

EP 0 877 916 B1

**Beschreibung**

Stand der Technik

Die Erfindung betrifft ein Verfahren und eine Vorrichtung zur Messung des Winkels eines drehbaren Körpers, insbesondere eines um mehr als 360° drehbaren Körpers, nach der Gattung des Hauptanspruchs.

Bei verschiedenen Anwendungen, besonders bei Einrichtungen, mit deren Hilfe die Winkelstellung einer drehbaren Welle ermittelt werden soll, besteht das Bedürfnis, gleich nach der Inbetriebnahme der Einrichtung die genaue Stellung der Welle zu kennen. Diese Forderung läßt sich am besten mit Hilfe von analogen Winkelsensoren, beispielsweise Potentiometern realisieren, die in jeder Position nach dem Einschalten sofort den gültigen Winkelstellungswert in Form einer Spannung ausgeben.

Werden solche Einrichtungen zur Winkelmessung für Winkelbereiche, die größer als 360° sind, eingesetzt, ergibt sich das Problem, daß nicht mehr feststellbar ist, in welcher Umdrehung sich die Welle befindet. Zur Auswertung von Winkelbereichen, die größer als 360° sind, können jedoch Inkrementalgeber verwendet werden, bei denen die Winkelstellung durch Vor- und Rückwärtszählen von Impulsen ermittelt wird. Mit solchen Inkrementalgebern läßt sich jedoch keine Absolutwinkelmessung durchführen, denn es können nur Inkremente gezählt werden, die sich an einem Aufnehmer vorbeibewegen.

Damit eine Winkelmessung für Winkelbereiche größer als 360° möglich ist, wird in der derzeit noch nicht veröffentlichten deutschen Patentanmeldung DE-P 44 09 892 im Zusammenhang mit der Erfassung eines Lenkwinkels eines Kraftfahrzeuges vorgeschlagen, die Bestimmung des Lenkradwinkels, der sich über einen Bereich von ± 720° erstreckt, mit Hilfe eines Planetenumlaufgetriebes durchzuführen. Dabei ist dieses Planetenumlaufgetriebe bezüglich seiner Zähnezahlen so dimensioniert, daß sich für die Übersetzung zwischen Lenkwelle und abzutastender Geberscheibe ein Wert von genau 4 ergibt. Die abzutastende Geberscheibe dreht sich also nur einmal, während sich der Lenkwinkel um ± 720° verändert. Durch Aufbringung eines Codes auf die Geberscheibe und Abtastung mittels eines geeigneten Aufnehmers läßt sich die Stellung der Geberscheibe sofort nach dem Einschalten der Einrichtung ermitteln, damit ist auch eine Lenkradwinkelbestimmung sofort möglich.

Diese bekannte Einrichtung zur Winkelmessung für Winkelbereiche größer als 360° hat den Nachteil, daß ein exakt dimensioniertes Planetenumlaufgetriebe erforderlich ist und zusätzlich ein aufwendiges Absolutgebersystem benötigt wird.

Aus der FR-A-2 697 081 ist eine Vorrichtung bzw. ein zugehöriges Verfahren zur Messung des Winkels eines drehbaren Körpers bekannt, bei dem auch bei Drehwinkeln von mehr als 360° bzw. über mehrere Umdrehungen des drehbaren Körpers eine Winkelbestimmung möglich ist. Der drehbare Körper ist über eine mechanische Verbindung mit zwei weiteren drehbaren Codierrädern verbunden, die eine unterschiedliche Anzahl von gleichförmigen Winkelmarken aufweisen. Die beiden Codierrädern werden mit Hilfe feststehender Sensoren abgetastet, die Ausgangssignale geben, aus denen die Winkelposition der Codierräder ermittelt werden kann. Aus den ermittelten Winkelpositionen wird unter Anwendung des Nonius-Prinzips die Winkellage des drehbaren Körpers berechnet.

Vorteile der Erfindung

Das erfindungsgemäße Verfahren und die erfindungsgemäße Vorrichtung zur Winkelmessung bei einem drehbaren Körper, insbesondere bei einem um mehr als 360° drehbaren Körper, hat demgegenüber den Vorteil, daß eine ganz allgemeine absolute Winkelmessung auch bei mehreren Umdrehungen möglich ist, ohne daß ein aufwendiges Planetengetriebe erforderlich ist. Durch die Verwendung zweier Sensoren, die zwei verschiedene Winkel ermitteln, werden Meßfehler reduziert. Das Meßprinzip läßt sich auf alle Winkelsensortypen wie optische, magnetische, kapazitive, induktive, resistive Sensoren anwenden, also auf beliebige Kontakt- und kontaktlose Sensoren.

Erzielt werden diese Vorteile, indem die Welle, deren Winkellage ermittelt werden soll, mit einem Zahnrad oder einem Zahnkranz versehen wird, der mit zwei weiteren Zahnrädern zusammenwirkt, deren Winkelstellung mit Hilfe je eines Sensors laufend ermittelt wird und indem der zu ermittelnde Winkel aus den beiden gemessenen Winkeln in geeigneter Weise berechnet wird.

Besonders vorteilhaft ist, daß sich der Winkelbereich und die Winkelgenauigkeit durch geeignete Wahl der Zahl der Winkelmarken bzw. -zähne der einzelnen Zahnräder oder Zahnkränze frei einstellen läßt. Die Anordnung der Zahnräder kann so gewählt werden, daß gewünschte Vorteile entstehen. Dabei können die Zahnräder in einer Ebene oder in unterschiedlichen Ebenen angeordnet sein.

Weitere Vorteile der Erfindung werden durch die in den abhängigen Ansprüchen angegebenen Maßnahmen erzielt. Dabei ist besonders vorteilhaft, daß zu große Meßfehler und der Ausfall eines Einzelsensors erkannt werden. Es ist durch Vergleich mit den letzten Werten erkennbar, welcher Sensor ggf. defekt ist und es ist in vorteilhafter Weise auch ein Notbetrieb mit einem einzigen Sensor möglich. Bei Verwendung eines 8-Bit-Analog-Digitalwandlers ist bei einem Lenkwinkelsensor, der nach dem erfindungsgemäßen Prinzip arbeitet, eine theoretische Auflösung von weniger als 0,1° des Lenkwinkels erreichbar.

Zeichnung

Ausführungsbeispiele der Erfindung sind in der Zeichnung dargestellt und werden in der nachfolgenden Beschreibung näher erläutert. Dabei zeigt im einzelnen Figur 1 eine erste Anordnung, mit der der Winkel einer um mehr als 360° drehbaren Welle erfaßbar ist. Figur 2 zeigt das Ausführungsbeispiel eines Lenkwinkelsensors, wobei Figur 2a die Anordnung der Zahnräder in einer Draufsicht und Figur 2b in gesamte Anordnung zur Erfassung des Lenkwinkels einschließlich der zugehörigen Sensoren sowie der Auswerteschaltung darstellt. In Figur 3 ist ein Flußdiagramm eines erfindungsgemäßen Verfahrens dargestellt.

Beschreibung

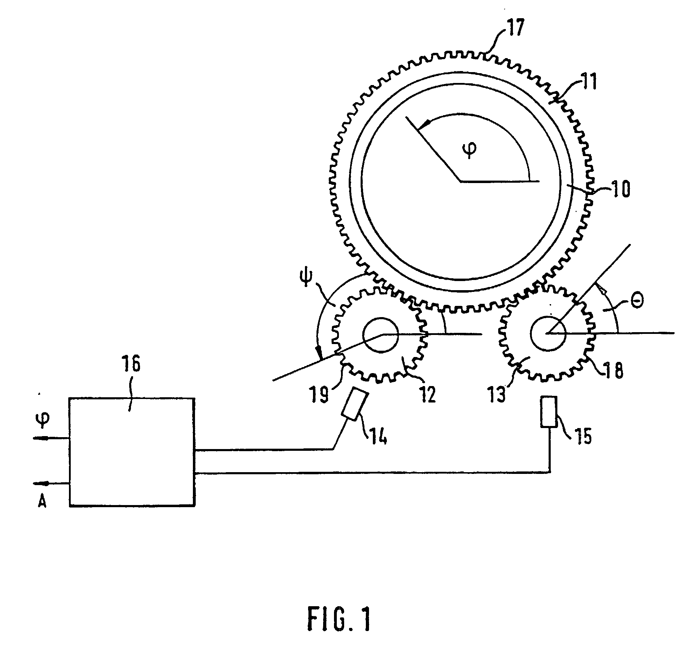

In Figur 1 bezeichnet 10 eine Achse bzw. einen drehbaren Körper, deren Drehwinkel $\varphi$ gemessen werden soll. Auf diese Achse 10 ist ein Zahnrad 11 aufgebracht, das n Zähne besitzt. Zwei weitere Zahnräder 12 und 13, die m und m + 1 Zähne haben, sind ortsfest mit dem Zahnrad 11 gekoppelt. Die Winkel $\psi$, und $\theta$ dieser Zahnräder werden mit Hilfe zweier periodischer Winkelsensoren 14, 15 gemessen. Diese Messung kann berührend oder berührungslos erfolgen. Die Periodizität der Winkelsensoren soll mit $\Omega$ bezeichnet werden. Üblicherweise wird $\Omega$ = 180° oder = 360° betragen, es sind jedoch auch andere Winkelgrößen möglich.

Die Winkelsensoren sind mit einer elektronischen Auswerteschaltung 16 verbunden, in der die zur Bestimmung des Achswinkels $\varphi$ erforderlichen Berechnungen ablaufen.

Unter der Voraussetzung, daß die Winkelsensoren 14, 15 sogenannte Absolutsensoren sind, liefern sie sofort nach Einschalten der Einrichtung zur Erfassung der Winkellage der Welle 10 die beim Einschalten vorliegenden Drehwinkel $\psi$ und $\theta$ der Zahnräder 12 und 13. Aus diesen Winkeln kann sofort eindeutig der Winkel $\varphi$ der Welle 10 bestimmt werden, sofern die Zahl der Winkelmarken bzw. Zähne 17 des Zahnrades 11 und die Zahl der Winkelmarken bzw. Zähne 18, 19 der Zahnräder 13, 12 bekannt sind.

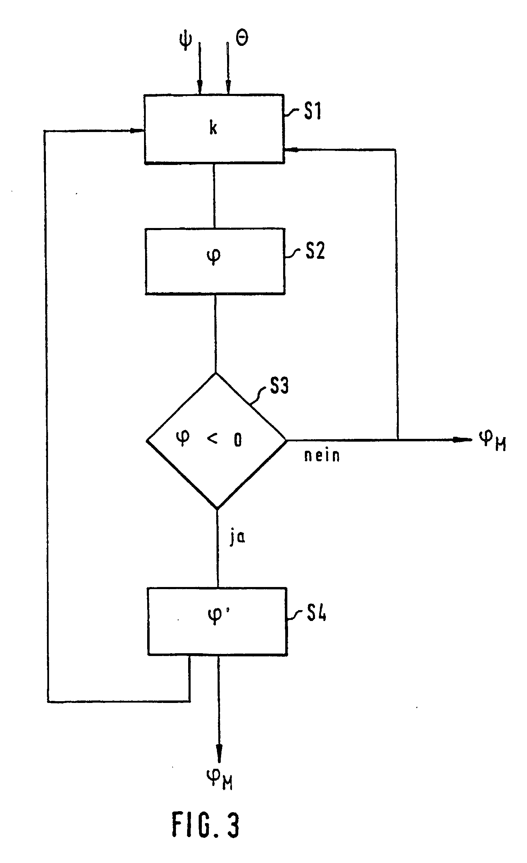

Je nachdem wie *groß* der Winkel $\varphi$, der erfaßt werden soll, sein kann, ist die Zahl der Zähne 17, 18, 19 der einzelnen Zahnräder zu wählen. Für einen Winkelerfassungsbereich von $\varphi$ = 3600° und einem Meßbereich $\Omega$ der beiden Winkelsensoren 14, 15 von 360° und einer erforderlichen Genauigkeit von 1° muß die Zahl der Zähne des Zahnrades 11 n = 87 sein, die Zahl der Zähne m muß dann = 29 sein. Mit solchen Zahnrädern läßt sich der Winkelbereich von 3600° so darstellen, daß für die Winkel $\theta$ und $\psi$ innerhalb dieses Winkelbereiches eindeutige Zuordnungen möglich sind. Die Berechnung des Drehwinkels $\varphi$ erfolgt nach dem Einschalten der erfindungsgemäßen Vorrichtung nach einem Verfahren, wie es sich z. B. Figur 3 entnehmen läßt: Es wird in der Auswerteschaltung 16 in einem ersten Schritt S1 die nächste ganze Zahlk des Ausdruckes

$$\frac{(m + 1) \cdot \theta - m \cdot \psi}{\Omega} \qquad (1)$$

berechnet, wobei die Winkel $\theta$ und $\psi$ zuvor gemessen wurden. Als Schritt S2 wird dann der Winkel $\varphi$ berechnet, wobei gilt:

$$\varphi = \frac{m \cdot \psi + (m + 1) \cdot \theta - (2m + 1) \cdot k \cdot \Omega}{2n} \qquad (2)$$

Im Schritt S3 wird geprüft, ob der zuvor ermittelte Winkel $\varphi$ negativ ist. Ist dies der Fall, wird im Schritt S4 die volle Winkelperiode addiert, es gilt:

$$\varphi' = \varphi + \frac{m \cdot (m + 1)}{n} \cdot \Omega \qquad (3)$$

Der so erhaltene Winkel $\varphi'$ wird dann als tatsächlicher Meßwert $\varphi_M$ übernommen. Wird im Schritt S3 dagegen erkannt, daß $\varphi$ nicht kleiner als 0 ist, wird der in Schritt S2 ermittelte Winkel als gemessener Winkel $\varphi_M$ ausgegeben.

Nach Ausgabe des Meßwertes $\varphi_M$ beginnt die nächste Winkelbestimmung aus den nächsten gemessenen Winkeln $\theta$ und $\psi$ im Schritt S1.

Der Meßfehler E der einzelnen Winkelsensoren 14, 15 überträgt sich nach Gleichung (2) im Verhältnis m/n auf den Fehler des Winkels $\varphi$, so daß durch geeignete Wahl des Übertragungsverhältnisses m/n die Meßgenauigkeit eingestellt werden kann. wird der Meßfehler der einzelnen Sensoren allerdings so groß, daß bei der Rundung nach Gleichung (1) eine falsche ganze Zahl k berechnet wird, so ändert sich der ermittelte Winkel φ nicht kontinuierlich, sondern sprunghaft um den Betrag:

$$\Delta\varphi = \pm\frac{2m + 1}{2n} \cdot \Omega \qquad (4)$$

Dies läßt sich dadurch abfangen, daß die Änderung des Wertes für k nach Formel (1) verfolgt wird. Beim kontinuierlichen Übergang von ψ und/oder θ über Ω nach 0 und umgekehrt kann der Wert von k nur ganzzahlige Änderungen von ± m und ± (m + 1) annehmen. Wird ein anderer Sprung registriert, ist dies ein Hinweis auf einen zu großen Meßfehler oder einen defekten Einzelsensor. Die im Verfahren nach Figur 3 im Schritt SI ermittelten aufeinanderfolgenden Werte für k können also miteinander verglichen werden und bei unplausiblen Änderungen kann ein Fehler erkannt werden. Eine Fehleranzeige A kann dann von der Auswerteschaltung 16 abgegeben werden.

Damit der richtige Wert für k erhalten wird, muß der Winkelfehler der Einzelsensoren 14, 15 kleiner sein als

$$\delta = \pm\frac{0,5 \cdot \Omega}{2m + 1} \qquad (5)$$

womit sich der maximale Winkelfehler für den Winkel φ wie folgt ergibt:

$$\delta\varphi = \frac{m \cdot \Omega}{2n \cdot (2m + 1)} \qquad (6)$$

Größere Winkelfehler der Einzelsensoren führen auf einen Sprung von φ, der durch eine unerlaubte Änderung von k festgestellt werden kann.

Die Möglichkeit, den Drehwinkel φ aus den beiden Winkel ψ und θ zu berechnen, läßt sich wie folgt erklären:

Aufgrund der Zahnzahlen gilt der Zusammenhang zwischen dem

Winkel φ und den beiden Winkeln ψ und θ

$$\psi = -\frac{n}{m} \cdot \varphi \bmod \Omega \qquad (\bmod = \text{modulo}) \qquad (7)$$

$$\theta = \frac{n}{m + 1} \cdot \varphi \bmod \Omega \qquad (8)$$

Da beide Winkel sich nach dem Winkel Ω wiederholen, muß nur der Rest bei der Division durch Ω verwendet werden.

Die Umkehrung von (7) und (8) lautet:

$$\varphi = \frac{m}{n} \cdot (\psi + i \cdot \Omega) \qquad (9)$$

bzw.

$$\varphi = \frac{m + 1}{n} \cdot (\theta + j \cdot \Omega) \qquad (10)$$

i und j sind ganze Zahlen, die zunächst unbekannt sind, da beispielsweise bei einem Winkel ψ zwischen 0° und Ω nicht bekannt ist, wie oft sich ψ über Ω gedreht hat.

Da (9) und (10) aber denselben Winkel ψ liefern müssen, gilt (9) = (10), was auf die Beziehung

$$m \cdot i - (m + 1) \cdot j = \frac{(m + 1) \cdot \theta - m \cdot \psi}{\Omega} \qquad (11)$$

führt.

Die linke Seite von (11) ist eine ganze Zahl, daher muß auch die rechte Seite ganzzahlig sein:

$$k = \frac{(m + 1) \cdot \theta - m \cdot \psi}{\Omega} \tag{12}$$

Da die Winkel $\theta$ und $\psi$ fehlerbehaftet sind (prinzipieller und statistischer Meßfehler, Digitalisierung), wird (12) in der Regel nicht ganzzahlig sein. Wählt man aber die nächste ganze Zahl dieses Ausdrucks, so werden die Fehler der Winkel sehr stark reduziert.

Die Gleichung (11) lautet dann:

$$m \cdot i - (m + 1) \cdot j = k \tag{13}$$

Dies ist eine Gleichung für zwei Unbekannte i und j, da i und j aber ganzzahlig sein müssen, hat (13) diskrete Lösungen (sog. diophantisches Problem). Die einzige Lösung, die man für die Auswertung braucht, läßt sich leicht finden:

$$i = j = -k \tag{14}$$

Mit diesen Werten läßt sich $\varphi$ als Mittelwert von (9) und (10) berechnen (dadurch werden eventuelle Meßfehler erneut verkleinert).

$$\varphi = \frac{m \cdot \psi + (m + 1) \cdot \theta - (2m + 1) \cdot k \cdot \Omega}{2n} \tag{15}$$

Das so berechnete $\varphi$ kann sowohl positive als auch negative Werte annehmen. Um eine kontinuierliche Darstellung zu erhalten, muß bei negativen Werten die volle Periode des gesamten Systems addiert werden:

$$\varphi' = \varphi + \frac{m \cdot (m + 1)}{n} \cdot \Omega \tag{16}$$

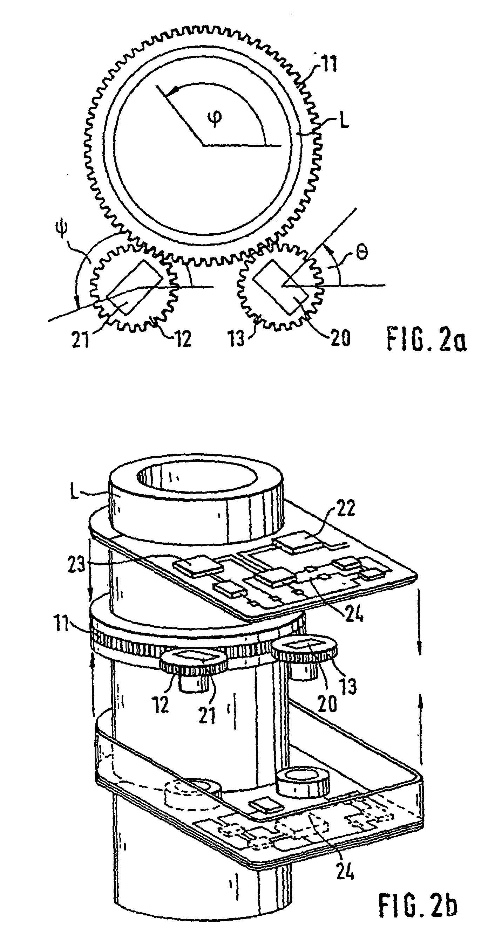

In den Figuren 2a und 2b ist eine erfindungsgemäße Vorrichtung zur Messung des Winkels der Lenkachse L eines Kraftfahrzeuges dargestellt. Zu diesem Zweck wird ein möglichst berührungsloser Sensor benötigt, der maximal 4 Lenkraddrehungen bzw. Umdrehungen der Lenkachse erfassen kann.

Die Lenkachse L, deren Winkel $\varphi$ zu bestimmen ist, entspricht der in Figur 1 mit 10 bezeichneten Welle. Für die Zahnräder sowie die eingetragenen Winkel $\theta$ und $\varphi$ gelten die Zusammenhänge nach Figur 1. Zusätzlich befinden sich auf den Zahnrädern 18 und 19 Magnete 20 und 21, deren Magnetisierung in der Zahnradebene liegt. Mit Hilfe zweier als AMR (d. h. anisotrope magnetoresistive)-Sensoren bezeichneten Winkelsensoren 22, 23, die den Sensoren 14, 15 nach Figur 1 entsprechen, werden die Winkel $\psi$ und $\varphi$ gemessen. Ein Beispiel für den Zusammenbau eines Lenkwinkelsensors ist der Figur 2b zu entnehmen. Bei diesem Beispiel liegen die drei Zahnräder 11, 12, 13 in einer Ebene. Auf den Zahnrädern 12 und 13 sind die Magnete 21, 20 angeordnet, mit Hilfe dieser Magnete sowie der beiden AMR-Winkelsensoren 22, 23 können die Winkel $\theta$ und $\psi$ absolut erfaßt werden. Die Auswerteschaltung, die die Ausgangssignale der AMR-Sensoren verarbeitet, ist als Hybridschaltung 24 dargestellt. Die Bestimmung der Winkel $\psi$ und $\varphi$ erfolgt durch Erkennen der Magnetfeldverläufe, die von den Magneten 20, 21 verursacht werden.

Anstelle von AMR-Sensoren können auch andere Winkelsensoren, beispielsweise Winkelsensoren auf Hall-Basis, optische Sensoren, induktive, kapazitive oder resistive Sensoren verwendet werden. Je nach verwendetem Sensortyp ist es erforderlich, die Zahnräder in geeigneter Weise anzupassen. Anstelle von Zahnrädern können auch Codescheiben, auf denen geeignete Codesysteme aufgebracht sind, verwendet werden.

Damit die bei Lenkwinkeln erforderliche Winkelerfassung über 4 volle Umdrehungen möglich ist, kann n = 69 und m = 23 gewählt werden, es ergibt sich dann eine Gesamtperiode von 1440°, also gerade 4 Umdrehungen.

**Patentansprüche**

1. Verfahren zur Messung des Winkels $\varphi$ eines drehbaren Körpers (11), auch bei Winkeln von mehr als 360°, der eine Anzahl von gleichförmigen Winkelmarken bzw. Zähnen (17) aufweist und mit wenigstens zwei weiteren drehbaren Zahnrädern (12, 13), die eine andere Anzahl von gleichförmigen Winkelmarken bzw. Zäh-nen (18;19) aufweisen, zusammenwirkt, mit zwei Sensoren (14, 15), die den Zahnrädern (12, 13) zugeordnet sind und Signale liefern, die der Winkellage φ und θ dieser Zahnräder (12, 13) entsprechen, und aus den Signalen die Winkel θ und ψ ermittelt werden, **dadurch gekennzeichnet, dass**, die Winkellage φ aus den ermittelten Winkeln θ und ψ sowie in einem eusten schritt einer ganzen Zahl k bestimmt wird, wobei die Zahl k definiert ist als die nächste ganze Zahl des Ansdruckes $((m+1)θ - m*φ)/Ω$ , wobei m und m+1 die Zahl der Zähne der Zahnräder (12, 13) und Ω die Periodizität der Sensorsignale ist und in einem zweiten Schritt der zu erfassende Winkel φ, ausgehend von diesem k-Wert, bestimmt wird durch Auswertung der Gleichung

$$\varphi = \frac{m * \psi + (m + 1) * \theta - (2m + 1) * k * \Omega}{2n}$$

und bei einem negativen Winkel φ anschließend die volle Winkelperiode hinzu addiert wird.

2. Verfahren nach Anspruch 1, **dadurch gekennzeichnet, dass** die Zahl k auf plausible Änderungen überwacht wird und bei unplausiblen Änderungen von k ein Fehler erkannt wird.

3. Verfahren nach Anspruch 1 oder 2, **dadurch gekennzeichnet, dass** der zu ermittelnde Winkel der Lenkwinkel eines Kraft-fahrzeugs ist und das erste Zahnrad (11) mit der Lenkwelle in Verbindung steht und sich mit dieser dreht.

4. Vorrichtung zur Messung des Winkels φ eines drehbaren Körpers (11), **dadurch gekennzeichnet, dass** Auswertemittel (16) vorhanden sind zur Durchführung wenigstens eines Verfahrens nach einem der Ansprüche 1-3 und dass die Sensoren, die zur Ermittlung der Winkellage der Zahnräder (12, 13) dienen, AMR-Winkelsensoren (22,23) sind, die mit den Zahnrädern (12, 13) in Verbindung stehende Magnete (20,21) abtasten.

5. Vorrichtung nach Anspruch 4, **dadurch gekennzeichnet, dass** die zur Bestimmung des Winkels φ aus den Winkeln ψ und θ eingesetzten Auswertemittel (16) eine Auswerteschaltung umfassen, die als Hybridschaltung (24) aufgebaut ist und die beiden AMR-Winkelsensoren (22,23) Bestandteil dieser Hybridschaltun (24) sind.

## Claims

1. Method for measuring the angle φ of a rotatable body (11), including in the case of angles of more than 360°, which has a number of uniform angle marks and/or teeth (17) and cooperates with at least two further rotatable toothed wheels (12, 13) which have a different number of uniform angle marks and/or teeth (18; 19), having two sensors (14, 15) which are assigned to the toothed wheels (12, 13) and supply signals which correspond to the angular position ψ and θ of these toothed wheels (12, 13), and the angles θ and ψ are determined from the signals, **characterized in that** the angular position φ is determined from the determined angle θ and ψ and, in a first step, from a whole number k, the number k being defined as the next whole number of the expression $((m+1)*\theta - m*\psi)/\Omega$, m and m+1 being the number of teeth of the toothed wheels (12, 13), and Ω being the periodicity of the sensor signals, and the angle φ to be detected being determined, starting from this k value, in a second step by evaluating the equation

$$\varphi = \frac{m * \psi + (m + 1) * \theta - (2m + 1) * k * \Omega}{2n}$$

and the complete angular period being added thereto in the event of a negative angle φ.

2. Method according to Claim 1, **characterized in that** the number k is monitored for plausible changes and an error is detected in the event of implausible changes in k.

3. Method according to Claim 1 or 2, **characterized in that** the angle φ to be determined is the steering angle of a motor vehicle, and the first toothed wheel (11) is connected to the steering shaft and rotates with the latter.

4. Device for measuring the angle φ of a rotatable body (11), **characterized in that** evaluating means (16) are present for carrying out at least one method according to one of claims 1-3, and **in that** the sensors which serve to determine the angular position of the toothed wheels (12, 13) are AMR angle sensors (22, 23) which scan magnets (20, 21) connected to the toothed wheels (12, 13).

5. Device according to Claim 4, **characterized in that** the evaluating means (16) used for determining the angle φ

from the angles ψ and θ comprise an evaluation circuit which is designed as a hybrid circuit (24), and the two AMR angle sensors (22, 23) are a component of this hybrid circuit (24).

**Revendications**

1. Procédé de mesure de l'angle φ d'un corps tournant (11) même pour des angles supérieurs à 360° comportant un certain nombre de repères angulaires ou de dents (17) de même forme et au moins deux autres roues dentées (12, 13) rotatives qui ont un nombre différent de repères angulaires de même forme ou de dents (18, 19), avec deux capteurs (14, 15) associés aux roues dentées (12, 13) et fournissant des signaux correspondants aux positions angulaires ψ et θ de ces roues dentées (12, 13) et qui détermine les angles θ et ψ à partir de ces signaux, **caractérisé en ce que**
   on détermine la position φ à partir des angles θ et ψ obtenus ainsi que dans une première étape à partir d'un nombre entier k ;
   le nombre entier k étant défini comme nombre entier le plus proche de l'expression $((m + 1) * θ - m * ψ)/Ω$ dans laquelle m et (m + 1) représente le nombre des dents des roues dentées (12, 13) et Ω est la périodicité des signaux de capteurs ; et
   dans une seconde étape on détermine l'angle φ en partant de cette valeur k et en utilisant l'équation :

$$\varphi = \frac{m * \psi + (m + 1) * \theta - (2m + 1) * k * \Omega}{2n}$$

   et
   pour un angle φ négatif, on ajoute ensuite toute la période angulaire.

2. Procédé selon la revendication 1,
   **caractérisé en ce qu'**
   on surveille la plausibilité des variations du nombre k et en cas de variation non plausible, on considère que k est erroné.

3. Procédé selon les revendications 1 ou 2,
   **caractérisé en ce que**
   l'angle φ à déterminer est l'angle de braquage d'un véhicule et la première roue dentée (11) coopère avec la colonne de direction et tourne avec celle-ci.

4. Dispositif de mesure de l'angle φ d'un corps tournant (11), **caractérisé par** des moyens d'exploitation (16) pour effectuer au moins un procédé selon l'une des revendications 1 à 3 et les capteurs servant à déterminer la position angulaire des roues dentées (12, 13) sont des capteurs d'angle AMR (22, 23) détectant des aimants (20, 21) en liaison avec les roues dentées (12, 13).

5. Dispositif selon la revendication 4,
   **caractérisé en ce que**
   les moyens d'exploitation (16) utilisés pour déterminer l'angle φ à partir des angles ψ et θ comprennent un circuit d'exploitation en forme de circuit hybride (24) et les deux capteurs d'angle AMR (22, 23) font partie de ce circuit hybride (24).

FIG. 1

FIG.2a

FIG.2b

FIG. 3